# FASCICULE DE BREVET EUROPEEN

(11) **EP 0 830 985 B1**
(45) Date de publication et mention de la délivrance du brevet: **02.01.2002**
(21) Numéro de dépôt: 97402183.4
(22) Date de dépôt: 19.09.1997
(51) Int. Cl.: B60R 1/00

(54) **Dispositif de rétrovision directe par caméra pour véhicule**
Rückblickeinrichtung mit Kamera für Kraftfahrzeug
Rear view device with camera for vehicle

(30) Priorité: 19.09.1996 FR 9611442
(43) Date de publication de la demande: 25.03.1998
(73) Titulaire: RENAULT VEHICULES INDUSTRIELS, 69800 SAINT PRIEST (FR)
(72) Inventeur: Nguyen, Hoang Giang, 91130 Ris Orangis (FR); Noyer, Jean-Marie, 69210 Lentilly (FR)
(74) Mandataire: Palix, Stéphane

(56) Documents cités:
- EP-A- 0 314 642
- DE-A- 4 304 005
- FR-A- 2 687 000
- GB-A- 2 296 154
- US-A- 5 530 421
- PATENT ABSTRACTS OF JAPAN vol. 17, no. 697 (M-1532), 20 décembre 1993 & JP 05 238314 A (HONDA MOTOR), 17 septembre 1993,
- PATENT ABSTRACTS OF JAPAN vol. 16, no. 380 (M-1295), 14 août 1992 & JP 04 123945 A (TOSHIBA), 23 avril 1992,
- PATENT ABSTRACTS OF JAPAN vol. 14, no. 291 (M-0989), 22 juin 1990 & JP 02 092753 A (NISSEI OPUTO), 3 avril 1990,
- PATENT ABSTRACTS OF JAPAN vol. 16, no. 458 (M-1315), 24 septembre 1992 & JP 04 163251 A (OKI ELECTRIC), 8 juin 1992,
- PATENT ABSTRACTS OF JAPAN vol. 16, no. 161 (M-1237), 20 avril 1992 & JP 04 011533 A (FUJITSU), 16 janvier 1992,
- PATENT ABSTRACTS OF JAPAN vol. 95, no. 2, 31 mars 1995 & JP 06 321009 A (MITSUBISHI), 22 novembre 1994,

## Description

L'invention concerne un disposiitif de rétrovision directe par caméra CCD pour véhicule notamment industriel, conçu pour l'aide aux manoeuvres de dépassement et d'accostage.

Un type connu de système de rétrovision connu actuellement est constitué d'une caméra CCD et d'un écran à tube ou à cristaux liquides, présentés sous forme de kit que les conducteurs de véhicules industriels achètent et installent eux-mêmes sur leurs véhicules. La caméra CCD vise le sol avec un angle plongeant fixe et est montée en hauteur, par exemple sur le toit des remorques ou des caravanes. Le conducteur visualise sur l'écran l'image de la scène routière située à l'arrière du véhicule, y compris la partie arrière de ce dernier, pour ses manoeuvres d'accostage ou du parking;

Un autre exemple de réalisation d'un système de rétrovision par caméra, formant l'état de la technique le plus proche, est décrit dans le brevet japonais JP 7 117 562 A de MITSUBISHI MOTOR CORPORATION. Mais aucun des systèmes actuels n'offre au conducteur une vision directe globale autour du véhicule, dont la visibilité est très supérieure à celle fournie par les miroirs de rétrovision actuels.

Par la publication JP 05238314, on connaît un autre système de rétrovision par caméra, prenant en compte les changements de direction du véhicule pour évaluer son angle mort, et restituer au conducteur une image de celui-ci.

Enfin la publication JP 04123945 divulgue un système de surveillance latérale par caméra visant essentiellement à faciliter l'entrée du véhicule dans une place de parking.

Toutefois, aucun des systèmes de rétrovision par caméra connus, n'offre une visibilté très supérieure à celle qui est fournie habituellement par les miroirs de rétrovision.

La présente invention vise à offrir au conducteur une vision directe globale autour du véhicule.

Dans ce but, elle propose un dispositif de rétrovision directe pour véhicule automobile comprenant au moins une caméra numérique CCD, au moins un écran de visualisation des images provenant de la caméra et un calculateur électronique embarqué, le dispositif comprenant un système de caméra motorisée, comprenant au moins une caméra numérique CCD sensible dans le spectre visible de jour, pour une longueur d'onde comprise entre 400 et 700 nanomètres, et sensible dans le spectre proche infrarouge de nuit, pour une longueur d'onde comprise entre 700 et 1100 nanomètres, destinée à observer la scène routière, un calculateur électronique assurant notamment la gestion complète du dispositif pour le pilotage des caméras, les traitements des images, la gestion d'autres services à bord et la transmission d'un signal vidéo sur un écran multifonctions à cristaux liquides, en fonction des commandes du conducteur du véhicule élaborées sur un clavier.
Selon une autre caractéristique, le dispositif de l'invention comporte une caméra de rétrovision arrière, une caméra de vision d'accostage associée à un projecteur proche infrarouge, et deux caméras de rétrovision latérale, dont celle qui longe le bas côté de la route, est associée à un projecteur proche infrarouge.

D'autres caractéristiques et avantages de l'invention apparaîtront à la lecture de la description illustrée par les figures suivantes qui sont :
- la figure 1 : une vue de profil d'un véhicule industriel équipé du dispositif selon l'invention ;
- la figure 2 : une vue de face du même véhicule ;
- la figure 3 : un schéma électronique d'un dispositif selon l'invention ;
- la figure 4 : un schéma électronique d'un système de caméra motorisée compris dans le dispositif selon l'invention ;
- la figure 5 : un schéma électronique d'un calculateur électronique du dispositif selon l'invention.
- la figure 6 : une vue schématique de face de la cabine de pilotage du véhicule.

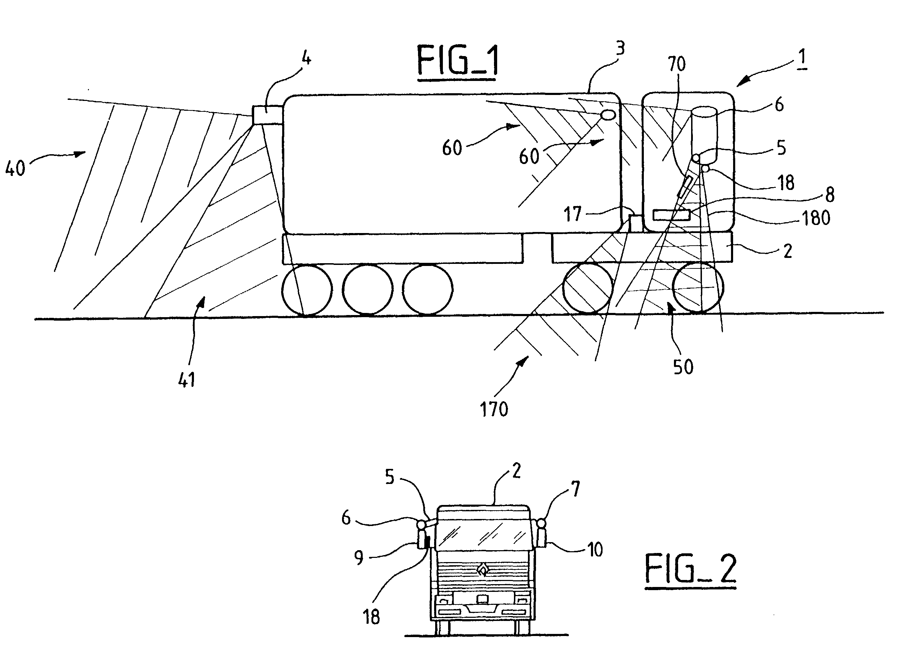

Comme le montre la figure 1 qui est une vue de profil d'un véhicule industriel 1 composé d'un tracteur 2 avec cabine de pilotage et d'une remorque 3, le dispositif comprend au moins une caméra numérique de type CCD, "Charge Coupled Device", sensible dans le spectre visible de jour, soit pour une longueur d'onde comprise entre 400 et 700 nanomètres, et sensible dans le spectre proche infrarouge de nuit, pour une longueur d'onde comprise entre 700 et 1100 nanomètres, destinée à observer la scène routière.
Selon l'application envisagée, le dispositif comprend une ou plusieurs caméras placées en différents endroits du véhicule. Pour la rétrovision arrière, en présence d'une remorque attachée au tracteur, il existe deux fonctions : en roulage pour l'aide aux manoeuvres de dépassement d'autres véhicules circulant sur la chaussée et en accostage pour l'aide aux manoeuvres de parking. Cela nécessite une caméra 4 de rétrovision arrière et une caméra 5 de vision d'accostage, associées toutes les deux à un même écran de visualisation. Pour la rétrovision latérale grand angle, il faut une caméra 6 et 7 respectivement pour chaque côté droit et gauche du véhicule ou de la remorque.

Les images de la scène routière captées par les caméras CCD sont transmises par liaison galvanique directe ou par liaison hertzienne par porteuse, sur au moins un écran 70 multifonctions à cristaux liquides, placé dans le champ de vision du conducteur, à l'intérieur de la cabine de pilotage. Cet écran est une interface graphique utilisé pour la rétrovision en même temps ou en temps partagé avec d'autres services à bord du véhicule, comme l'aide à la conduite par exemple.

Le dispositif selon l'invention comprend enfin un calculateur 8 électronique embarqué, utilisé pour le pilotage des caméras, les traitements des images et la gestion d'autres services à bord.

La figure 2 est une vue de face du tracteur 2 d'un véhicule industriel normalement équipé d'un système de rétrovision à base de miroirs, un miroir principal 9 à droite de la cabine associé à un miroir grand angle, et un miroir principal à gauche 10, sur laquelle est représenté l'emplacement des caméras 6 de rétrovision latérale, fixées chacune au niveau des miroirs principaux, celui de la caméra 5 de vision d'accostage avec son projecteur 18 proche infrarouge.

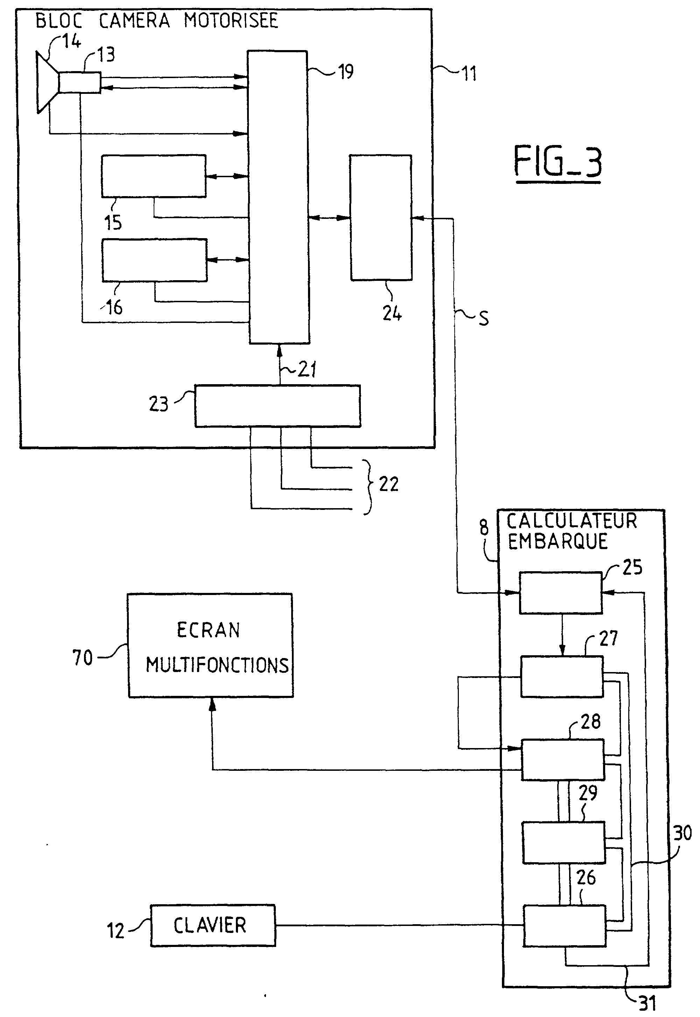

La figure 3 est un schéma électronique du dispositif de rétrovision selon l'invention, comprenant au moins un système 11 de caméra motorisée, un calculateur électronique 8 assurant notamment la gestion complète du dispositif et la transmission d'un signal vidéo sur un écran 70 multifonctions à cristaux liquides, en fonction des commandes du conducteur élaborées sur un clavier 12.

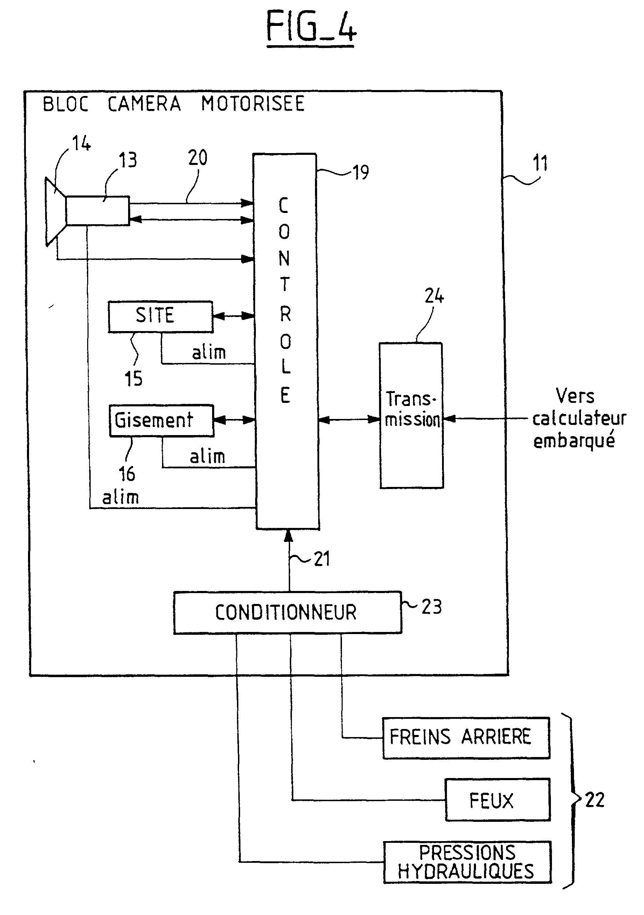

Le système 11 de caméra motorisée, qui concerne principalement la rétrovision arrière, et en second lieu, la rétrovision latérale, et qui représenté sur la figure 4, est constitué d'au moins une caméra 13 CCD "charge coupled device", avec un objectif 14 à focale variable. Il peut comporter une caméra de vision arrière, deux caméras latérales et une caméra d'accostage. Cette caméra peut être monobloc à tête tri-CCD, c'est-à-dire composée de trois capteurs CCD disposés derrière un prisme de séparation des composants de couleur rouge, vert et bleu. Elle peut aussi être composée de deux caméras mono-CCD, dont l'une fonctionne en mode "couleur" grâce aux éléments du capteur CCD recouverts de filtres de couleur rouge, vert et bleu, et dont l'autre fonctionne en mode monochrome proche infrarouge grâce à un filtre proche infrarouge disposé devant le capteur CCD. De jour, la caméra en mode couleur observe la scène routière et transcrit l'image à l'écran 70 LCD multifonctions, implanté dans le tableau de bord de la cabine de pilotage. De nuit, l'autre caméra CCD monochrome est associée à au moins un projecteur proche infrarouge afin d'observer la route. Ces projecteurs sont fixés à l'arrière de la remorque, dans le cas de rétrovision arrière, ou fixés du côté droit du tracteur 2 du véhicule dans le cas de rétrovision latérale droite.

Il est particulièrement intéressant de régler l'angle de site et/ou l'angle de gisement de la caméra, grâce à un moteur 15 réalisant la rotation en site de la caméra et à un moteur 16 pour la rotation en gisement. Ainsi, lors du roulage du véhicule, le conducteur peut régler l'angle de site de la caméra de rétrovision arrière pour voir l'horizon de la scène routière arrière et, lors des manoeuvres d'accostage, il peut régler ce même angle afin de voir l'arrière de sa remorque.
Sur la figure 1, sont représentés en traits hachurés les champs de vision arrière 40 en mode roulage et 41 en mode d'accostage, de la caméra arrière 4. La caméra 6 de rétrovision latérale, dont le champ de vision est référencé 60 sur la figure 1, destinée à observer le bas côté de la route le long duquel circule le véhicule, qu'elle soit droite ou gauche pour la Grande-Bretagne, joue le rôle du miroir d'accostage quand elle est motorisée, ce qui permet de supprimer la caméra latérale d'accostage.

Comme on le voit sur les figures 1 et 2, les caméras 6 et 7 de rétrovision latérale gauche et droite sont intégrées dans le boîtier des rétroviseurs à miroirs 9 et 10 qui demeurent en place sur le véhicule. Par contre, on supprime le miroir de rétrovision grand angle conventionnel, dont le champ de vision est très inférieur au champ offert par ces caméras. Pour le fonctionnement de nuit, la caméra 6 de rétrovision latérale droite est associée à un projecteur 17 proche infrarouge, fixé sur le tracteur 2 et destiné à éclairer par son faisceau 170 le bas côté de la route le long duquel circule le véhicule. Grâce à leur fonctionnement de jour en mode couleur et de nuit en mode noir et blanc, le dispositif d'aide selon l'invention offre au conducteur l'avantage d'une surveillance des accès d'autoroute où tout véhicule débouchant sur l'autoroute est visible avec la caméra latérale de droite, ainsi qu'une surveillance des voies d'accès aux ronds-points sur route ou en ville. Il permet également le maintien de la tenue de route sur l'autoroute et le réseau routier en général grâce à l'observation des marquages sur le côté droit de la chaussée, marquages éclairés par le projecteur proche infrarouge installé sur le tracteur et orienté vers l'arrière droit du véhicule.

La caméra 5 de vision d'accostage est également intégrée dans le miroir 9 de rétrovision latérale droite, avec un projecteur 18 proche infrarouge d'accostage dont le faisceau 180 éclaire le champ de vision 50 de la caméra correspondant à l'environnement immédiat du véhicule dans les manoeuvres d'accostage le long de quais ou de trottoirs, avec une quantité d'énergie suffisante pour que le conducteur obtienne une bonne qualité d'images.

Quant à la caméra 4 de rétrovision arrière, elle est intégrée dans un boîtier étanche fixé par exemple sur une barre transversale haute de la remorque du véhicule. L'avantage de la rotation en site de cette caméra est de satisfaire à deux conditions d'utilisation : tout d'abord, la vision arrière en roulage en orientant la caméra vers le haut pour obtenir un champ de vision qui couvre une zone d'observation allant d'environ cinq mètres à partir de l'arrière de la remorque jusqu'à l'horizon ; et ensuite la vision arrière en manoeuvre en orientant la caméra vers le bas pour obtenir un champ de vision s'étendant de l'arrière de la remorque jusqu'à une distance de 10 mètres en arrière. Un avantage supplémentaire du dispositif selon l'invention obtenu grâce à cette vision directe de l'arrière de la remorque tient au fait que le conducteur lui-même, sans l'aide d'une tierce personne à l'extérieur du véhicule, peut vérifier le bon fonctionnement des feux de position et des feux de stop de la remorque, en restant dans sa cabine de pilotage.

Chaque caméra CCD du système 11 de caméra motorisée est montée sur un support permettant des mouvements en site et en gisement à l'aide des deux moteurs en site 15 et en gisement 16, dont la commande est reliée à un circuit 19 interface de contrôle.

Ce circuit 19 interface de contrôle à microprocesseur, ou microcontrôleur, est destiné à gérer des protocoles de transmission de deux lignes série, de type RS 232 par exemple, dont l'une 20 assure la transmission des données venant de la ou des caméras CCD 13 ainsi que la transmission des paramètres de réglage des caméras, comme le temps d'exposition dans la formation d'image, le réglage du gain et de la couleur, la balance de blanc, etc ... .

L'autre ligne série 21 assure la transmission des informations sur l'état dynamique d'une partie du véhicule, c'est-à-dire de la remorque dans le cas de la caméra de rétrovision arrière et du tracteur dans le cas de la caméra de vision latérale, délivrées par des capteurs proprioceptifs 22 présents sur le véhicule tels qu'un tachymètre, un gyromètre, un capteur de freins arrière, un capteur d'allumage des feux, un capteur de pression hydraulique, etc ... . Les données provenant de ces capteurs sont d'abord mises en forme par un module 23 conditionneur avant d'arriver sur le circuit 19 interface de contrôle avec lequel il dialogue par une interface série de type RS 232.

Le système il de caméra motorisée comporte également un module 24 de transmission-réception très haute fréquence, destiné à mixer les signaux issus des capteurs proprioceptifs 22, et les signaux de la caméra CCD sous porteuse radiofréquence HF et à moduler le signal vidéo à bande large, la fréquence porteuse des signaux des capteurs à bande étroite, la fréquence porteuse des données de réglage de la caméra à bande étroite (gain, temps d'exposition ...) sur au moins une seule fréquence porteuse très haute fréquence d'un signal S. Ce signal VHF est ensuite envoyé sur un câble coaxial ou sur l'émetteur hertzien VHF. La fonction réception du module 24 consiste à recevoir les signaux provenant d'un module d'émission VHF intégré au calculateur électronique 8.

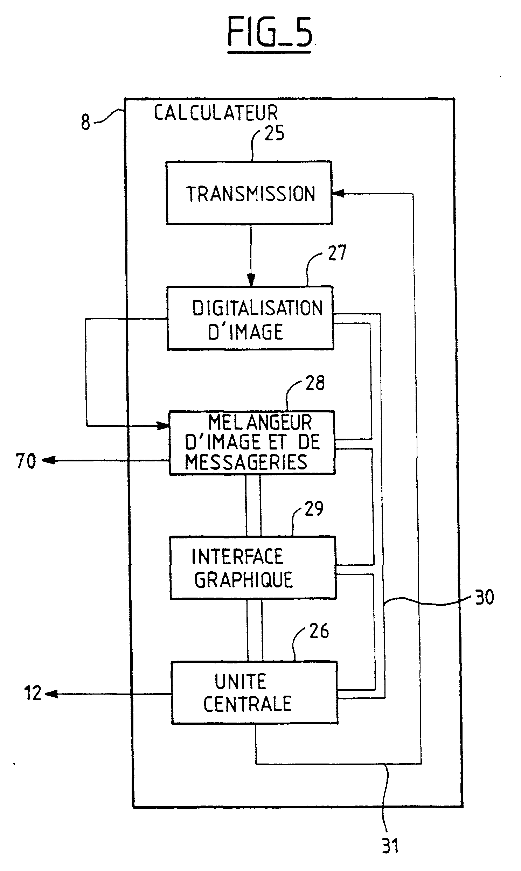

La figure 5 est le schéma électronique du calculateur 8 embarqué dans la cabine de pilotage du véhicule industriel. Il comporte un module 25 de transmission très haute fréquence, avec une partie réception VHF et une partie émission VHF. Cette partie réception VHF a pour fonction de démoduler le signal S transportant le signal vidéo, les signaux de contrôle des caméras et des moteurs 15 et 16 ainsi que les signaux émis par les capteurs proprioceptifs 22. La partie émission VHF a pour fonction de moduler les signaux de commande de la ou des caméras CCD, de l'objectif 14 à focale variable et des moteurs 15 et 16 de déplacement des caméras.

Ces signaux de commande sont élaborés par une unité centrale 26 qui assure la gestion complète du dispositif de rétrovision, c'est-à-dire :
- la liaison entre le conducteur et le dispositif de rétrovision par l'intermédiaire d'un clavier 12 ;
- la gestion graphique, les commandes des caméras CCD et de leurs moteurs d'entraînement ;
- le mélange d'images vidéo et de messages alphanumériques ou symboliques ;
- les calculs élémentaires nécessaires à la détection de marquage au sol et à la détection d'obstacles.

Le calculateur comprend aussi un circuit 27 de digitalisation d'images, dont la fonction est de numériser l'image en vue de son traitement, notamment pour la détection de marquage au sol et la détection d'obstacles constitués en particulier par les véhicules se trouvant sur les voies de circulation. Les résultats de ces deux types de détection sont utilisés pour l'aide aux manoeuvres de dépassement. L'image vidéo brute, en provenance du système 11 de caméra motorisée, transite par ce circuit de digitalisation avant d'être envoyé sur un circuit 28 mélangeur d'images et de messageries prévu dans le calculateur, dont la fonction est de mixer des messages à l'image vidéo venant de la caméra CCD. Le calculateur électronique 8 comprend aussi un circuit 29 d'interface graphique permettant d'afficher les messages alphanumériques ou symboliques sur l'écran multifonctions 70, qui affiche également les signaux vidéo de la scène routière. Ainsi, sur son écran, le conducteur dispose d'une image vidéo de rétrovision en même temps qu'il reçoit les messages d'infographie ou de diagnostic des paramètres de sa remorque, comme la pression des pneus, l'usure des freins ... .

Les circuits de digitalisation d'image 27, de mélange d'images et de messageries 28, d'interface graphique 29 et l'unité centrale 26 sont reliés entre eux par un bus d'adresse 30. Une ligne série 31 connecte l'unité centrale 26 au module de transmission VHF 25 pour la commande de l'objectif 14 de la caméra et de ses moteurs d'entraînement, ainsi que pour le réglage des paramètres de fonctionnement de la caméra.

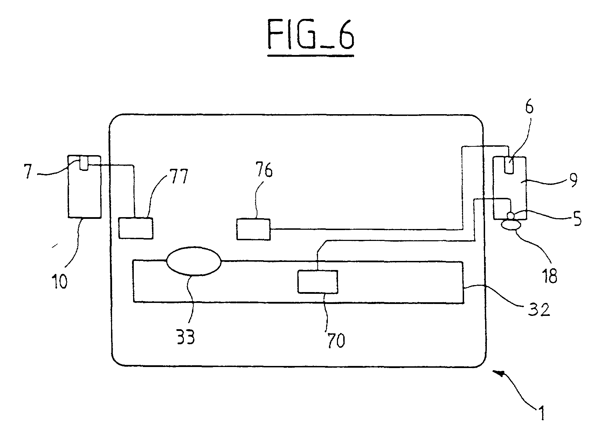

Le circuit 28 mélangeur d'images et de messages envoie le signal vidéo composé d'une image vidéo avec incrustation de messages alphanumériques ou symboliques, sur une barrette horizontale en haut de l'image par exemple, à l'écran multifonctions 70. Cet écran est à cristaux liquides LCD. Dans le cas de rétrovision arrière de la remorque, à une caméra CCD placée à l'arrière de cette remorque est associé un écran de visualisation multifonctions placé au niveau du tableau de bord de la cabine de pilotage, comme le montre la figure 6, qui est une vue schématique de face de la cabine de pilotage, afin que la vision arrière soit affichée en permanence sur l'écran. Ce même écran est associé à la caméra latérale 5 d'accostage, quand celle-ci n'est pas remplacée par une caméra de rétrovision latérale motorisée. Chaque caméra 6 et 7 de rétrovision latérale placée au niveau d'un miroir principal 9 et 10 respectivement, est associée à un écran de visualisation à cristaux liquides 76 et 77 respectivement, de telle sorte que le conducteur voit sur ces deux écrans, placés au niveau du tableau de bord 32 de part et d'autre du volant 33, la scène routière défilant de chaque côté de son véhicule. Les manoeuvres de dépassement sur route, comme les manoeuvres d'accostage le long des quais de livraison, sont rendues ainsi plus sûres. Concernant la rétrovision arrière, elle permet au conducteur, notamment de véhicules articulés comme les semi-remorques, de maintenir le contact visuel avec le côté et l'arrière de la remorque afin de contrôler ses manoeuvres de dépassement et facilite le rabattement du véhicule devant l'obstacle qu'il a dépassé, elle permet aussi de surveiller l'arrière de sa remorque pour une meilleure tenue de conduite, et afin qu'elle facilite les manoeuvres de recul, notamment à l'approche des quais.

L'invention s'applique bien entendu à tout véhicule automobile, qu'il soit de tourisme ou poids lourds.

## Revendications

1. Dispositif de rétrovision directe pour véhicule automobile comprenant au moins un système (11) de caméra numérique CCD sensible dans le spectre visible de jour, pour une longueur d'onde comprise entre 400 et 700 nanomètres, et sensible dans le spectre proche infrarouge de nuit, pour une longueur d'onde comprise entre 700 et 1100 nanomètres, destinée à observer la scène routière, un calculateur électronique embarqué (8) assurant notamment la gestion complète du dispositif pour le pilotage des caméras, les traitements des images, la gestion d'autres services à bord et la transmission d'un signal vidéo sur un écran de visualisation (70) multifonctions à cristaux liquides, en fonction des commandes du conducteur du véhicule élaborées sur un clavier (12), **caractérisé en ce que** le système (11) de caméra est constitué de :
- au moins une caméra (13) numérique CCD motorisée, avec un objectif (14) à focale variable et mobile grâce à deux moteurs d'entraînement en site (15) et en gisement (16),
- un circuit (19) interface de contrôle à microprocesseur commandant les moteurs (15 et 16) et gérant la transmission des signaux venant de la caméra (13) et de signaux sur l'état dynamique du véhicule venant de capteurs (22) proprioceptifs,
- un module (23) conditionneur des signaux provenant des capteurs (22) proprioceptifs, relié au circuit (19) interface de contrôle,
- un module (24) de transmission-réception, relié au circuit (19) interface de contrôle, transmettant sur une seule très haute fréquence porteuse, les signaux issus de la caméra (13) et des capteurs (22) proprioceptifs et recevant des signaux du calculateur (8) électronique.

2. Dispositif de rétrovision selon la revendication 1, **caractérisé en ce que** le circuit (19) interface de contrôle gère des protocoles de transmission d'une première ligne série (20) assurant la transmission des signaux issus de la caméra (13) et de ses paramètres de réglage, et d'une seconde ligne série (21) assurant la transmission des signaux sur l'état dynamique du véhicule issus des capteurs (22) proprioceptifs.

3. Dispositif de rétrovision selon la revendication 1, **caractérisé en ce que** le module (24) de transmission-réception mélange les signaux vidéo à large bande issus de la caméra (13), la fréquence porteuse des signaux issus des capteurs (22) à bande étroite et la fréquence porteuse des données de réglage de la caméra (13) à bande étroite sur au moins une très haute fréquence porteuse, qui est envoyée sur un câble coaxial ou un émetteur hertzien très haute fréquence vers le calculateur électronique (8).

4. Dispositif de rétrovision selon la revendication 1, **caractérisé en ce que** la caméra numérique CCD (13) est monobloc à tête tri-CCD composée de trois capteurs CCD disposés derrière un prisme de séparation des composants de couleur rouge, vert et bleu.

5. Dispositif de rétrovision selon la revendication 1, **caractérisé en ce que** la caméra numérique CCD (13) est composée de deux caméras mono-CCD, dont l'une fonctionne en mode couleur et l'autre en mode monochrome proche infrarouge, associée à un projecteur proche infrarouge.

6. Dispositif de rétrovision selon la revendication 5, **caractérisé en ce qu'**il comporte une caméra (4) de rétrovision arrière, une caméra (5) de vision d'accostage associée à un projecteur (18) proche infrarouge, et deux caméras (6 et 7) de rétrovision latérale, dont celle qui longe le bas côté de la route, est associée à un projecteur proche infrarouge (17).

7. Dispositif de rétrovision selon la revendication 6, **caractérisé en ce que** la caméra (4) de rétrovision arrière et la caméra (5) de rétrovision latérale qui longe le bas côté de la route sont motorisées .

8. Dispositif de rétrovision selon la revendication 6, **caractérisé en ce que** la caméra (4) de rétrovision arrière et la caméra (5) de vision d'accostage sont associées toutes les deux à un même écran de visualisation (70).

9. Dispositif de rétrovision selon la revendication 6, **caractérisé en ce que** chaque caméra (6 et 7) de rétrovision latérale placée au niveau d'un miroir principal (9 et 10) respectivement, est associée à un écran de visualisation à cristaux liquides (76 et 77) respectivement, ces deux écrans étant placés au niveau du tableau de bord (32) de part et d'autre du volant (33) du véhicule.

10. Dispositif de rétrovision selon la revendication 1, **caractérisé en ce que** le calculateur (8) électronique, embarqué dans le véhicule comporte :
- un module (25) de transmission très haute fréquence dont la partie réception démodule le signal très haute fréquence (S) provenant du système (11) de caméra motorisée et dont la partie émission module les signaux de commande de la caméra (13), de l'objectif (14) à focale variable et des moteurs d'entraînement (15 et 16),
- une unité centrale (26) assurant la gestion du dispositif,
- un circuit (27) de digitalisation d'images venant de la caméra (13),
- un circuit (28) mélangeur d'images issues de la caméra (13) et de messages alphanumériques ou symboliques,
- un circuit (29) d'interface graphique pour l'affichage simultané des messages sur les images issues de la caméra (13), sur l'écran (70) multifonctions à cristaux liquides.

11. Dispositif de rétrovision selon la revendication 10, **caractérisé en ce que** les circuits de digitalisation d'images (27), de mélange d'images et de messages (28), d'interface graphique (29) et l'unité centrale (26) sont reliés entre eux par un bus d'adresses (30), et **en ce qu'**une ligne série (31) relie l'unité centrale (26) au module de transmission (25) très haute fréquence.

12. Dispositif de rétrovision selon la revendication 10, **caractérisé en ce que** le circuit (27) de digitalisation d'images est destiné à numériser les images issues de la caméra (13) pour la détection de marquage au sol et la détection d'obstacles au sol.

## Patentansprüche

1. Direkte Rückblickvorrichtung für ein Kraftfahrzeug, umfassend mindestens ein digitales CCD-Kamerasystem. (11), das gegenüber dem tagsüber sichtbaren Spektrum mit einer Wellenlänge zwischen 400 und 700 Manometern sowie gegenüber dem Nahinfrarotspektrum der Nacht mit einer Wellenlänge zwischen 700 und 1100 Manometern empfindlich ist und dazu bestimmt ist, die Straßenszene zu beobachten, einen mitgeführten elektronischen Rechner (8), der insbesondere für die vollständige Verwaltung der Vorrichtung zur Steuerung der Kameras, die Verarbeitung der Bilder, die Verwaltung anderer an Bord befindlicher Dienste und die Übertragung eines Videosignals auf einen Flüssigkristall-Vielzweckbildschirm (70) in Abhängigkeit von den Befehlen des Lenkers des Fahrzeugs, die über eine Tastatur (12) eingegeben werden, sorgt, **dadurch gekennzeichnet, dass** das Kamerasystem (11) folgendes umfasst:
- mindestens eine motorisierte digitale CCD-Kamera (13) mit einem Objektiv (14) mit variabler Brennweite, die durch zwei Motoren zum Antrieb nach oben bzw. unten (15) und zur Seite (16) beweglich ist,
- einen Kontrollschnittstellen-Schaltkreis (19) mit Mikroprozessor, der die Motoren (15 und 16) steuert und die Übertragung der Signale, die von der Kamera (13) kommen, und von Signalen über den dynamischen Zustand des Fahrzeugs, die von propriozeptiven Sensoren (22) kommen, verwaltet,
- ein Modul (23) zur Aufbereitung der von den propriozeptiven Sensoren (22) kommenden Signale, das mit dem Kontrollschnittstellen-Schaltkreis (19) verbunden ist,
- ein Übertragungs- und Empfangsmodul (24), das mit dem Kontrollschnittstellen-Schaltkreis (19) verbunden ist und das auf einer einzigen, sehr hohen Trägerfrequenz die von der Kamera (13) und den propriozeptiven Sensoren (22) kommenden Signale überträgt und Signale des elektronischen Rechners (8) empfängt.

2. Rückblickvorrichtung nach Anspruch 1, **dadurch gekennzeichnet, dass** der Kontrollschnittstellen-Schaltkreis (19) die übertragungsprotokolle einer ersten seriellen Leitung (20), die für die Übertragung der von der Kamera (13) kommenden Signale und ihrer Einstellparameter sorgt, und einer zweiten seriellen Leitung (21), die für die Übertragung der von den propriorezeptiven Sensoren (22) kommenden Signale über den dynamischen Zustand des Fahrzeugs sorgt, verwaltet.

3. Rückblickvorrichtung nach Anspruch 1, **dadurch gekennzeichnet, dass** das Übertragungs- und Sendemodul (24) die von der Kamera (13) kommenden Breitband-Videosignale, die Trägerfrequenz der von den Sensoren (22) kommenden Schmalband-Signale und die Trägerfrequenz der Schmalband-Einstelldaten der Kamera (13) auf mindestens einer sehr hohen Trägerfrequenz mischt, die durch ein Koaxialkabel oder einen Funksender mit sehr hoher Frequenz zum elektronischen Rechner (8) gesendet wird.

4. Rückblickvorrichtung nach Anspruch 1, **dadurch gekennzeichnet, dass** die digitale CCD-Kamera (13) eine Monoblock-Kamera mit Dreifach-CCD-Kopf ist, die aus drei CCD-Sensoren zusammengesetzt ist, die hinter einem Prisma zur Trennung der roten, grünen und blauen Farbkomponenten angeordnet sind.

5. Rückblickvorrichtung nach Anspruch 1, **dadurch gekennzeichnet, dass** die digitale CCD-Kamera (13) aus zwei Mono-CCD-Kameras zusammengesetzt ist, von denen eine im Farbmodus und die andere, die mit einem Nahinfrarotscheinwerfer verbunden ist, im einfarbigen Modus funktioniert.

6. Rückblickvorrichtung nach Anspruch 5, **dadurch gekennzeichnet, dass** sie eine Kamera (4) zum hinteren Rückblick, eine Kamera (5) zur Darstellung des Anfahrens in Verbindung mit einem Nahinfrarotscheinwerfer (18) und zwei Kameras (6 und 7) zum seitlichen Rückblick umfasst, von denen diejenige, die den Straßenrand entlangfährt, mit einem Nahinfrarotscheinwerfer (17) verbunden ist.

7. Rückblickvorrichtung nach Anspruch 6, **dadurch gekennzeichnet, dass** die Kamera (4) zum hinteren Rückblick und die Kamera (6) zum seitlichen Rückblick, die den Straßenrand entlangfährt, motorisiert sind.

8. Rückblickvorrichtung nach Anspruch 6, **dadurch gekennzeichnet, dass** die Kamera (4) zum hinteren Rückblick und die Kamera (5) zur Darstellung des Anfahrens alle beide mit dem gleichen Anzeigebildschirm (70) verbunden sind.

9. Rückblickvorrichtung nach Anspruch 6, **dadurch gekennzeichnet, dass** jede Kamera (6 und 7) zum seitlichen Rückblick, die sich jeweils m Bereich eines Hauptspiegels (9 und 10) befindet, jeweils mit einem Flüssigkristall-Anzeigebildschirm (76 und 77) verbunden ist, wobei diese beiden Bildschirme im Bereich des Armaturenbretts (32) zu beiden Seiten des Lenkrads (33) des Fahrzeugs angeordnet sind.

10. Rückblickvorrichtung nach Anspruch 1, **dadurch gekennzeichnet, dass** der im Fahrzeug mitgeführte elektronische Rechner (8) umfasst:
- ein Modul (25) zur Übertragung mit sehr hoher Frequenz, dessen Empfangsteil das vom motorisierten Kamerasystem (11) kommende, sehr hochfrequente Signal (S) demoduliert und dessen Sendeteil die Signale zur Steuerung der Kamera (13), des Objektivs (14) mit variabler Brennweite und der Antriebsmotoren (15 und 16) moduliert,
- eine Zentraleinheit (26), die für die Verwaltung der Vorrichtung sorgt,
- einen Schaltkreis (27) zur Digitalisierung der von der Kamera (13) kommenden Bilder,
- einen Schaltkreis (28) zur Mischung von Bildern aus der Kamera (13) und alphanumerischen oder symbolischen Meldungen,
- einen Graphikschnittstellen-Schaltkreis (29) zur gleichzeitigen Anzeige der Meldungen auf den Bildern von der Kamera (13) auf dem Flüssigkristall-Vielzweckbildschirm (70).

11. Rückblickvorrichtung nach Anspruch 10, **dadurch gekennzeichnet, dass** der Bilddigitalisierungsschaltkreis (27), der Schaltkreis (28) zur Mischung von Bildern und Meldungen, der Graphikschnittstellen-Schaltkreis (29) und die Zentraleinheit (26) durch einen Adressbus (30) untereinander verbunden sind und dass eine serielle Leitung (31) die Zentraleinheit (26) mit dem sehr hochfrequenten Übertragungsmodul (25) verbindet.

12. Rückblickvorrichtung nach Anspruch 10, **dadurch gekennzeichnet, dass** der Bilddigitalisierungsschaltkreis (27) dazu bestimmt ist, die von der Kamera (13) kommenden Bilder zur Erkennung der Bodenmarkierungen und zur Erkennung von Hindernissen am Boden zu digitalisieren.

## Claims

1. A direct rear-view device for a motor vehicle comprising at least one CCD digital camera system (11) sensitive to the visible daylight spectrum at a wavelength of between 400 and 700 nanometres and sensitive to the near infrared night spectrum at a wavelength of between 700 and 1100 nanometres, adapted to observe the road scene, an on-board electronic computer (8) in particular for full management of the device for piloting the cameras, image processing, the management of other on-board services and the transmission of a video signal on a multi-function liquid crystal display screen (70) as a function of controls from the vehicle driver on a keyboard (12), **characterised in that** the camera system (11) is formed by:
- at least one motor-driven CCD digital camera (13), with a variable focus lens (14), moving by means of two drive motors in elevation (15) and in bearing (16),
- a microprocessor control interface circuit (19) controlling the motors (15, 16) and managing the transmission of the from the camera (13) and signals on the dynamic state of the vehicle from proprioceptive sensors (22),
- a conditioning module (23) for the signals from the proprioceptive sensors (22) connected to the control interface circuit (19),
- a transmission-reception module (24) connected to the control interface circuit (19) transmitting, on only one very high carrier frequency, the signals from the camera (13) and the proprioceptive sensors (22) and receiving signals from the electronic computer (8).

2. A rear-view device as claimed in claim 1, **characterised in that** the control interface circuit (19) manages the transmission protocols of a first line series (20) ensuring the transmission of the signals from the camera (13) and its adjustment parameters and a second line series (21) ensuring the transmission of the signals on the dynamic state of the vehicle from the proprioceptive sensors (22).

3. A rear-view device as claimed in claim 1, **characterised in that** the transmission-rceeption module (24) mixes the wide band video signals from the camera (13), the carrier frequency of the narrow band signals from the sensors (22) and the carrier frequency of the narrow band adjustment data of the camera (13) on at least one very high carrier frequency which is supplied on a very high frequency coaxial cable or radio transmitter to the electronic computer (8).

4. A rear-view device as claimed in claim 1, **characterised in that** the CCD digital camera (13) is in one piece with a tri-CCD head comprising three CCD sensors disposed behind a prism separating the red, green and blue colour components.

5. A rear-view device as claimed in claim 1, **characterised in that** the CCD digital camera (13) comprises two mono-CCD cameras, one operating in colour mode and the other in near infrared monochrome mode associated with a near infrared projector.

6. A rear-view device as claimed in claim 5, **characterised in that** it comprises a rear rear-view camera (4), a side view camera (5) associated with a near infrared projector (18) and two lateral rear-view cameras (6, 7), the one of which that scans the lower side of the road being associated with an near infrared projector (17).

7. A rear-view device as claimed in claim 6, **characterised in that** the rear rear-view camera (4) and the lateral rear-view camera (5) which scans the lower side of the road are motor-driven.

8. A rear-view device as claimed in claim 6, **characterised in that** the rear rear-view camera (4) and the side view camera (5) are both associated with the same display screen (70).

9. A rear-view device as claimed in claim 6, **characterised in that** each lateral rear-view camera (6, 7) disposed at the location of a respective main mirror (9, 10) is associated with a respective liquid crystal display screen (76, 77), these two screens being disposed on the dashboard (32) on either side of the steering wheel (33) of the vehicle.

10. A rear-view device as claimed in claim 1, **characterised in that** the vehicle's on-board electronic computer (8) comprises:
- a very high frequency transmission module (25) whose reception portion demodulates the very high frequency signal (S) from the motor-driven camera system (11) and whose transmission portion modulates the control signals for the camera (13), the variable focus lens (14) and the drive motors (15, 16),
- a central unit (26) managing the device,
- a digitisation circuit (28) for the images from the camera (13),
- a mixer circuit (28) for images from the camera (13) and alphanumeric or iconic messages,
- a graphics interface circuit (29) for the simultaneous display of messages on the images from the camera (13) on the multi-function liquid crystal screen (70).

11. A rear-view device as claimed in claim 10, **characterised in that** the image digitisation (27), image and message mixing (28) and graphics interface (29) circuits and the central unit (26) are connected together by an address bus (30) and **in that** a line series (31) connects the central unit (26) to the very high frequency transmission module (25).

12. A rear-view device as claimed in claim 10, **characterised in that** the image digitisation circuit (27) is adapted to digitise the images from the camera (13) for the detection of ground markings and the detection of ground obstacles.
